# FASCICULE DE BREVET EUROPEEN

(11) **EP 1 154 697 B1**
(45) Date de publication et mention de la délivrance du brevet: **23.04.2003**
(21) Numéro de dépôt: 00906446.0
(22) Date de dépôt: 21.02.2000
(51) Int. Cl.: A23B 7/154

(54) **PROCEDE DE TRAITEMENT DE FRUITS ET LEGUMES**
FRÜCHTE UND GEMÜSE BEHANDLUNGSVERFAHREN
TREATMENT METHOD FOR FRUITS AND VEGETABLES

(30) Priorité: 26.02.1999 FR 9902465
(43) Date de publication de la demande: 21.11.2001
(73) Titulaire: XEDA INTERNATIONAL, 13670 Saint-Andiol (FR)
(72) Inventeur: BOMPEIX, Gilbert, F-75011 Paris (FR); SARDO, Alberto, F-13160 Châteaubriand (FR)
(74) Mandataire: Bernasconi, Jean Raymond
(86) Numéro de dépôt international: FR0000432
(87) Numéro de publication internationale: WO00049880

(56) Documents cités:
- EP-A- 0 795 272
- EP-A- 0 972 450
- WO-A-91/05479
- WO-A-96/29867
- DE-A- 19 726 429
- FR-A- 2 733 393
- US-A- 3 518 096

## Description

La présente invention concerne un procédé de traitement des fruits et légumes frais.

Après leur récolte, les fruits et légumes frais sont couramment stockés, pendant une période qui peut être relativement longue, avant d'être mis sur le marché pour une consommation rapide.

Au cours de cette période de stockage, il importe que les fruits et légumes ne perdent pas leurs qualités, notamment leur aspect. Celles-ci peuvent être dégradées, en particulier par la prolifération de champignons à la surface du fruit ou du légume, qui conduit à la détérioration rapide du fruit ou du légume touché, ou par le phénomène d'échaudure de prematurité (ou "scald") qui se traduit par un noircissement de la peau des fruits ou légumes dû à des produits oxydés, s'accumulant dans le couche cireuse de surface, phénomène qui peut gagner la pulpe des fruits. Ces détériorations sont encore plus rapides si le fruit ou le légume présente des micro-blessures constituées par des entailles dans la peau.

De façon à retarder le plus possible le dégradation des fruits et des légumes, il est connu de les traiter, avant stockage, par des agents présentant une activité antioxydante.

D'après FR 96 03 100, on connaît un procédé de traitement des fruits et des légumes comprenant les étapes consistant à :
- porter à une température de 40 à 60° C une composition traitante liquide comprenant, dans un véhicule aqueux, au moins un agent traitant choisi parmi un agent antioxydant de type polyphénol, un composé terpénique et leurs mélanges, et
- mettre les fruits ou légumes dans la composition traitante liquide à ladite température pendant une durée inférieure ou égale à 10 minutes.

Suivant la nature de l'agent traitant utilisé, le traitement a un effet antioxydant et/ou antifongique.

D'après FR 98 15 305, on connaît un procédé de traitement de fruits et légumes comprenant l'application auxdits fruits et légumes d'une composition traitante à base d'un principe actif choisi parmi l'eugénol, l'isoeugénol et leurs sels en vue de retarder la prolifération des champignons et bactéries à la surface des fruits et légumes et de retarder la germination des pommes de terre.

EP 972 450 a été publié avant le dépôt de la présente demande et après la date de priorité du 26 février 1999.

Il décrit un procédé de traitement des fruits et légumes en deux étapes. Dans une première étape, les fruits et légumes sont refroidis à coeur. Dans une seconde étape, ils sont traités pendant au plus 10 minutes par une composition traitante aqueuse présentant une température de 40-60° C. Ladite composition traitante peut contenir un agent traitant à activité antioxydante ou fongicide.

EP 795 272 décrit un procédé de traitement de fruits et légumes après récolte consistant à mettre eu contact lesdits fruits et légumes avec une composition traitante contenant au moins un agent traitant choisi parmi un agent antioxydant de type polyphénol et un composé terpénique. A titre de composés terpéniques, seuls les terpinéol, eucalyptol, menthol, menthone, carvone, cinéol et citronellal sont cités.

L'invention fournit plus particulièrement un procédé de traitement antioxydant des fruits et légumes permettant de retarder, sinon d'éviter totalement, le phénomène d'échaudure de maturité et le noircissement de la peau des fruits et légumes.

Ce procédé utilise l'association d'un terpène (choisi parmi l'eugénol, l'isoeugénol, ses sels acceptables sur le plan alimentaire, et leurs mélanges) avec un antioxydant de type polyphénol et/ou avec un antioxydant de type tocophérol. De façon tout-à-fait surprenante, les inventeurs se sont rendu compte de l'effet synergique résultant de l'association de ces principes actifs dans un procédé comprenant les étapes consistant à :
- porter à une température de 40 à 60° C une composition traitante liquide comprenant, dans un véhicule aqueux, cette association de principes actifs, et
- immerger ou doucher les fruits et légumes dans, respectivement avec, la composition traitante liquide à ladite température pendant une durée inférieure ou égale à 10 minutes; à l'exclusion d'un procédé comprenant, avant l'étape (a), une étape de refroidissement à coeur desdits fruits et légumes.

Il a été constaté en effet que la protection obtenue vis-à-vis de l'oxydation est bien plus importante dans le cas de cette association que ne le laissaient supposer les résultats obtenus respectivement par application, dans les mêmes conditions, de tocophérol(s) seuls, de polyphénol(s) seul(s) ou de terpène(s) dérivé(s) de l'eugénol ou de l'isoeugénol, seuls : l'effet protecteur assuré par l'association de ces principes actifs n'est pas la simple addition des effets protecteurs assurés par chacun des principes actifs pris isolément.

Plus précisément, l'invention a pour objet un procédé pour le traitement des fruits et légumes, et plus particulièrement pour le traitement des pommes et des poires, comprenant les étapes consistant à :
- porter à une température de 40 à 60° C une composition traitante liquide comprenant, dans un véhicule aqueux, l'association d'un terpène choisi parmi l'eugénol, l'isoeugénol, leurs sels acceptables sur le plan alimentaire et leurs mélanges avec un ou plusieurs composés choisis parmi les tocophérols et les polyphénols;
- appliquer ladite composition traitante sur les fruits et légumes par immersion ou douchage, l'immersion, respectivement le douchage, étant poursuivi pendant un temps inférieur ou égal à 10 minutes; à l'exclusion d'un procédé comprenent avant l'étape (a), une étape de refroidissement à coeur desdits fruits et légumes.

Le terpène peut comprendre un sel de l'eugénol ou de l'isoeugénol acceptable sur le plan alimentaire. Des sels particulièrement préférés sont notamment les sels de métaux alcalins tels que les sels de sodium, les sels de lithium et les sels de potassium.

Selon un mode de réalisation particulièrement préféré, le terpène est l'eugénol, un sel de l'eugénol ou bien un mélange d'eugénol avec un ou plusieurs sels de celui-ci.

Tous les types de polyphénols peuvent être utilisés selon l'invention.

Des exemples de tels polyphénols sont la quercétine et le rosmaridiphénol de formules :

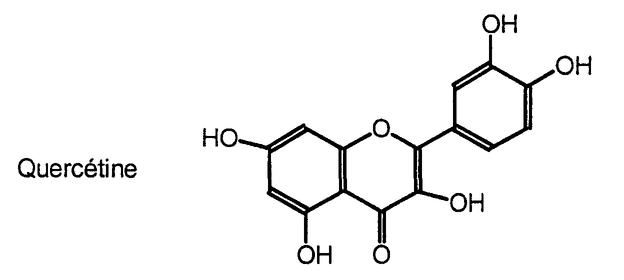

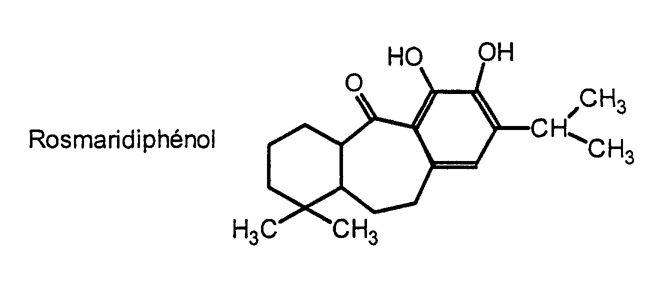

A titre de polyphénols préférés, on peut citer les polyphénols extraits de substances naturelles, comme par exemple les polyphénols extraits de végétaux ou de fruits.

Les polyphénols extraits de substances naturelles peuvent être utilisés après extraction sous la forme de mélanges complexes de plusieurs polyphénols avec diverses substances naturelles. Ces mélanges contiennent généralement au moins 50%, de préférence au moins 70%, mieux encore au moins 80% et plus préférablement au moins 90% en poids, de polyphénols. Toutefois, des mélanges moins concentrés peuvent également être utilisés. De tels extraits naturels, plus ou moins concentrés en polyphénols sont disponibles dans la technique. Parmi ceux-ci on peut citer les extraits d'épinards concentrés en polyphénols.

Les tocophérols utilisables selon l'invention sont ceux présentant une activité antioxydante. Parmi ceux-ci, on compte l'α-tocophérol (ou vitamine E), le β-tocophérol, le γ-tocophérol et le δ-tocophérol. L'α-tocophérol est un tocophérol préféré.

L'agent antioxydant utilisé dans le procédé de l'invention est préférablement constitué :
(i) d'un terpène (choisi parmi l'eugénol, l'isoeugénol, leurs sels acceptables sur le plan alimentaire, et leurs mélanges) et d'un ou plusieurs polyphénois, de préférence d'origine naturelle ; ou bien
(ii) d'un terpène tel que défini ci-dessus et d'un ou plusieurs tocophérols, de préférence l'α-tocophérol.

Selon un mode de réalisation particulièrement préféré, on utilise à titre d'agent antioxydant l'association d'eugénol et d'α-tocophérol ou l'association d'eugénol avec un ou plusieurs polyphénols d'origine naturelle, et notamment l'association d'eugénol avec de l'extrait d'épinard concentré contenant de 50 à 99% en poids de polyphénols, de préférence de 50 à 95%.

Selon l'invention, le traitement des fruits et légumes peut être mis en oeuvre juste après la récolté ou bien encore pendant la période de conservation et de stockage des fruits et légumes. De préférence, ce traitement est réalisé juste après récolte.

Le procédé de l'invention implique le traitement des fruits et légumes par une composition aqueuse (dite composition traitante) présentant une température comprise entré 40 et 60° C, de préférence entre 45 et 55° C, mieux encore entre 48 et 52° C, par exemple 50° C.

La composition traitante se présente avantageusement sous forme de solution ou de dispersion dans un véhicule aqueux.

Selon que le principe actif antioxydant est plus ou moins soluble dans l'eau, la composition peut également comprendre en outre au moins un tensioactif choisi de façon connue en soi parmi les tensioactifs non-ioniques, anioniques, cationiques et amphotères.

Selon l'invention, la composition traitante peut comprendre le terpène et le(s) tocophérol(s) et/ou le(s) polyphénol(s) dans des proportions quelconques.

De façon particulièrement avantageuse, ladite composition traitante comprend :
- de 1000 à 10 000 ppm (en poids) du terpène, de préférence de 1000 à 6000 ppm, mieux encore de 2000 à 5000 ppm, par exemple 2500 ppm, en association avec une ou plusieurs des quantités suivantes de tocophérols et/ou de polyphénols;
- de 3000 à 15 000 ppm (en poids) de polyphénol(s), de préférence de 3000 à 10 000 ppm, mieux encore de 3000 à 8000 ppm, par exemple 5000 ppm,
- de 500 à 10 000 ppm (en poids) de tocophérol(s), de préférence de 1000 à 3000 ppm, par exemple 1500 ppm.

L'application de la composition traitante aux fruits et légumes est réalisée soit par immersion, soit par douchage.

La durée de cette opération est très courte, généralement inférieure ou égale à 10 minutes, notamment de 30 secondes à 10 minutes, avantageusement de 30 secondes à 5 minutes. Un temps de contact de 2 à 3 minutes est le plus souvent suffisant.

L'application de la composition se fait de préférence de telle sorte que la quantité d'agent antioxydant utilisé est de 2 à 40 g/tonne de fruits ou légumes traités.

Lorsque la durée de traitement par la composition chaude désirée est atteinte, il peut être mis fin à l'application par tous moyens connus, notamment par simple arrêt du douchage ou retrait des fruits ou légumes du bac d'immersion. Les fruits ou légumes sont alors aptes à être stockés en vue de leur distribution ultérieure.

De manière surprenante, le procédé de l'invention conduit à une nette amélioration de l'activité antioxydante des terpènes dérivés de l'eugénol et de l'isoeugénol. Ce procédé permet ainsi l'utilisation de moindres quantités de principe actif antioxydant et conduit à une protection durable des fruits et légumes contre l'oxydation.

Dans la mesure où le terpène dérivé de l'eugénol ou de l'isoeugénol présente également une activité antifongique, on obtient parallèlement une protection des fruits et légumes contre les infections fongiques.

Ce procédé est d'autant plus avantageux que les agents traitants sont des substances naturelles dont l'ingestion est sans danger pour le consommateur.

Selon un autre de ses aspects l'invention concerne l'utilisation d'une composition traitante aqueuse portée à une température de 40 à 60° C et comprenant, à titre de principe actif antioxydant, l'association d'un terpène (choisi parmi l'eugénol, l'isoeugénol, leurs sels acceptables sur le plan alimentaire et leurs mélanges) avec un ou plusieurs composés choisis parmi les tocophérols et les polyphénols, pour le traitement antioxydant des fruits et légumes, et, notamment des pommes et des poires; sans refroidissement à coeur préalable desdits fruits et légumes.

Les exemples suivants illustrent plus avant l'invention. Dans ces exemples, on applique pendant 3 minutes la composition traitante, préalablement portée à 50° C, à des pommes Granny Smith, par immersion ou douchage.

Dans les exemples suivants, ppm désigne des parties par million en poids.

### EXEMPLE 1

### Traitement anti-échaudure sur des pommes par combinaison d'eugénol et d'un extrait d'épinard

La composition traitante (Composition A) est constituée d'eau, de 2500 ppm d'eugénol et de 5000 ppm d'un extrait concentré d'épinard (comprenant de 50 à 95 % en poids de polyphénols). Le traitement est réalisé par application de la composition traitante portée à 50° C sur les pommes pendant 3 minutes.

On stocke ensuite les pommes traitées à température ambiante (20° C) pendant 8 jours. On quantifie alors la proportion de pommes saines, la proportion de pommes dont moins de 1 cm² de surface est détériorée par échaudure et la proportion de pommes dont plus de 1 cm² de surface est touchée.

Les résultats obtenus sont rapportés dans le tableau suivant.

A titre de comparaison, on traite de façon analogue une même quantité de pommes :
- soit par une composition B constituée d'eau et de 2500 ppm d'eugénol ;
- soit par une composition C constituée d'eau et de 5000 ppm de l'extrait concentré d'épinard mentionné ci-dessus.

Les résultats obtenus ont été recueillis dans le tableau 1 ci-dessous.

Le témoin figurant dans ce tableau concerne les résultats obtenus dans le cas de pommes non traitées et stockées pendant 8 jours, à température ambiante (20° C).

Cette dernière étude a porté sur le même nombre de pommes que dans les cas précédents.

**TABLEAU 1**

| Composition traitante | Pommes saines (%) | Pommes touchées à raison de moins de 1 cm² (%) | Pommes touchées à raison de plus de 1 cm² (%) |
|---|---|---|---|
| A | 86 | 4 | 10 |
| B | 49 | 5 | 46 |
| C | 71 | 3 | 26 |
| témoin | 47 | 4 | 49 |

Il résulte clairement de ce tableau que le traitement par l'association d'eugénol et d'extrait d'épinard est bien plus efficace que ne le laissaient prévoir les résultats obtenus par traitement avec l'eugénol seul, ou par traitement avec les extraits d'épinard seul.

### EXEMPLE 2

### Traitement anti-échaudure sur des pommes par combinaison d'eugénol et d'α-tocophérol

La composition traitante (composition D) est constituée d'eau, de 2500 ppm d'eugénol et de 1500 ppm d'α-tocophérol.

Le traitement des pommes est réalisé dans les mêmes conditions qu'à l'exemple 1.

A titre de comparaison, on traite de façon analogue une même quantité de pommes :
- soit par une composition E constituée d'eau et de 2500 ppm d'eugénol ;
- soit par une composition F constituée d'eau et de 1500 ppm d'α-tocophérol.

Les résultats obtenus sont rapportés dans le tableau 2 ci-dessous.

Le témoin figurant dans ce tableau concerne les résultats obtenus dans le cas de pommes non traitées et stockées pendant 8 jours, à température ambiante (20° C).

Cette dernière étude a porté sur le même nombre de pommes que dans les cas précédents.

**TABLEAU 2**

| Composition traitante | Pommes saines (%) | Pommes touchées à raison de moins de 1 cm² (%) | Pommes touchées à raison de plus de 1 cm² (%) |
|---|---|---|---|
| D | 95 | 2 | 3 |
| E | 49 | 5 | 46 |
| F | 83 | 2 | 15 |
| témoin | 47 | 4 | 49 |

Là encore, on observe un effet synergique résultant de l'association α-tocophérol + eugénol.

### EXEMPLE 3 (comparatif)

### Traitement anti-échaudure sur des pommes par application de diphénylamine

La composition traitante (composition G) est constituée d'eau et de 500 ppm de diphénylamine.

Le traitement est réalisé dans les mêmes conditions qu'à l'exemple 1.

On recense ainsi :
- 97 % de pommes saines ;
- 1 % de pommes touchées à raison de moins de 1cm² de surface ;
- 2 % de pommes touchées à raison de plus de 1 cm² de surface.

## Revendications

1. Procédé de traitement anti-échaudive des fruits et légumes, comprenant les étapes consistant à:
(a) - porter à une température de 40 à 60° C une composition traitante liquide comprenant, dans un véhicule aqueux, l'association d'un terpène choisi parmi l'eugénol, l'isoeugénol, leurs sels acceptables sur le plan alimentaire et leurs mélanges avec un ou plusieurs composés choisis parmi les tocophérols et les polyphénols,
(b) - appliquer ladite composition traitante sur les fruits et légumes par immersion ou douchage, l'immersion respectivement le douchage, étant poursuivi pendant un temps inférieur ou égal à 10 minutes ;
à l'exclusion d'un procédé comprenant, avant l'étape (a), une étape de refroidissement à coeur desdits fruits et légumes.

2. Procédé selon la revendication 1, **caractérisé en ce que** la composition traitante est portée à une température comprise entre 48 et 52° C.

3. Procédé selon l'une quelconque des revendications 1 et 2, **caractérisé en ce que** la composition traitante comprend de 1000 à 10 000 ppm en poids-de terpène, de préférence de 1000 à 6000 ppm.

4. Procédé selon l'une quelconque des revendications précédentes, pour le traitement des pommes et des poires.

5. Procédé selon l'une quelconque des revendications 1 à 4, **caractérisé en ce que** la composition traitante comprend l'association d'eugénol avec l'α-tocophérol.

6. Procédé selon l'une quelconque des revendications 1 à 4, **caractérisé en ce que** la composition traitante comprend l'association d'eugénol avec un ou plusieurs polyphénols d'origine naturelle.

7. Procédé selon la revendication 6, **caractérisé en ce que** la composition traitante comprend l'association d'eugénol avec de l'extrait d'épinard concentré contenant de 50 à 95% en poids de polyphénols.

8. Procédé selon l'une quelconque des revendications 1 à 5, **caractérisé en ce que** la composition traitante comprend de 500 à 10 000 ppm en poids de tocophérol(s), de préférence de 1000 à 3000 ppm.

9. Procédé selon l'une quelconque des revendications 1 à 4, 6 et 7, **caractérisé en ce que** la composition traitante comprend de 3000 à 15 000 ppm en poids de polyphénol(s), de préférence de 3000 à 10 000 ppm.

10. Utilisation d'une composition traitante aqueuse portée à une température de 40 à 60° C et comprenant, à titre de principe actif antioxydant, l'association d'un terpène choisi parmi l'eugénol, l'isoeugénol, leurs sels acceptables sur le plan alimentaire et leurs mélanges avec un ou plusieurs composés choisis parmi les tocophérols et les polyphénols, pour le traitement des fruits et légumes en vue d'éviter le phénomène d'échaudure de prématurité et le noircissement de la peau des fruits et légumes, sans refroidissement à coeur préalable desdits fruits et légumes.

## Claims

1. Method for the anti-scald treatment of fruit and vegetables, comprising the following steps:
(a) - heating to a temperature of from 40 to 60°C a liquid treatment composition comprising, in an aqueous vehicle, a combination of a terpene selected from eugenol, isoeugenol, salts thereof that are acceptable in the foodstuffs sector and mixtures thereof, 7 with one or more compounds selected from the tocopherols and polyphenols,
(b) - applying said treatment composition to the fruit and vegetables by immersion or spraying, the immersion or spraying being carried out for a period of less than or equal to 10 minutes;
with the exception of a method comprising, prior to step (a), a step of cooling said fruit and vegetables to the core.

2. Method according to claim 1, **characterised in that** the treatment composition is brought to a temperature of from 48 to 52°C.

3. Method according to either claim 1 or claim 2, **characterised in that** the treatment composition comprises from 1000 to 10,000 ppm by weight of terpene, preferably from 1000 to 6000 ppm.

4. Method according to any one of the preceding claims, for the treatment of apples and pears.

5. Method according to any one of claims 1 to 4, **characterised in that** the treatment composition comprises a combination of eugenol with α-tocopherol.

6. Method according to any one of claims 1 to 4, **characterised in that** the treatment composition comprises a combination of eugenol with one or more polyphenols of natural origin.

7. Method according to claim 6, **characterised in that** the treatment composition comprises a combination of eugenol with concentrated spinach extract comprising from 50 to 95 % by weight of polyphenols.

8. Method according to any one of claims 1 to 5, **characterised in that** the treatment composition comprises from 500 to 10,000 ppm by weight of tocopherol(s), preferably from 1000 to 3000 ppm.

9. Method according to any one of claims 1 to 4, 6 and 7, **characterised in that** the treatment composition comprises from 3000 to 15,000 ppm by weight of polyphenol(s), preferably from 3000 to 10,000 ppm.

10. Use of an aqueous treatment composition brought to a temperature of from 40 to 60°C and comprising, as antioxidant active ingredient, a combination of a terpene selected from eugenol, isoeugenol, salts thereof that are acceptable in the foodstuffs sector and mixtures thereof, with one or more compounds selected from the tocopherols and polyphenols, in the treatment of fruit and vegetables in order to avoid the phenomenon of scald of prematurity and blackening of the skin of the fruit and vegetables, without prior cooling of said fruit and vegetables to the core.

## Patentansprüche

1. Verfahren zur Behandlung von Obst und Gemüse gegen Schalenbräune, umfassend folgende Stufen:
(a) - Bringen einer flüssigen Behandlungs-Zusammensetzung, die in einem wässrigen Medium die Kombination eines Terpens, ausgewählt aus Eugenol, Isoeugenol, deren für Nahrungsmittel brauchbaren Salzen und ihren Gemischen, mit einer oder mehreren Verbindungen, ausgewählt aus den Tocopherolen und den Polyphenolen, auf eine Temperatur von 40 bis 60°C,
(b) - Anwenden dieser Behandlungs-Zusammensetzung auf Obst und Gemüse durch Eintauchen oder Besprühen, wobei das Eintauchen bzw. das Besprühen während eines Zeitraums von unter oder gleich 10 Minuten durchgeführt wird;
unter Ausschluß eines Verfahrens, das vor der Stufe (a) eine Abkühlungsstufe bis zum Kern des Obstes und Gemüses umfasst.

2. Verfahren nach Anspruch 1, **dadurch gekennzeichnet, dass** die Behandlungszusammensetzung auf eine Temperatur von 48 bis 52°C gebracht wird.

3. Verfahren nach einem der Ansprüche 1 und 2, **dadurch gekennzeichnet, dass** die Behandlungs-Zusammensetzung 1000 bis 10000 ppm, bezogen auf das Gewicht, Terpen, vorzugsweise 1000 bis 6000 ppm, enthält.

4. Verfahren nach einem der vorhergehenden Ansprüche zur Behandlung von Äpfeln und Birnen.

5. Verfahren gemäß einem der Ansprüche 1 bis 4, **dadurch gekennzeichnet, dass** die Behandlungs-Zusammensetzung eine Kombination von Eugenol mit α-Tocopherol enthält.

6. Verfahren nach einem der Ansprüche 1 bis 4, **dadurch gekennzeichnet, dass** die Behandlungs-Zusammensetzung eine Kombination von Eugenol mit einem oder mehreren Polyphenolen natürlichen Ursprungs enthält.

7. Verfahren nach Anspruch 6, **dadurch gekennzeichnet, dass** die Behandlungs-Zusammensetzung eine Kombination von Eugenol mit einem konzentrierten Spinatextrakt, der 50 bis 95 Gew.-% Polyphenole enthält, umfasst.

8. Verfahren nach einem der Ansprüche 1 bis 5, **dadurch gekennzeichnet, dass** die Behandlungs-Zusammensetzung 500 bis 10000 ppm, bezogen auf das Gewicht, Tocopherol(e), vorzugsweise 1000 bis 3000 ppm umfasst.

9. Verfahren nach einem der Ansprüche 1 bis 4, 6 und 7, **dadurch gekennzeichnet, dass** die Behandlungs-Zusammensetzung 3000 bis 15000 ppm, bezogen auf das Gewicht an Polyphenol(en), vorzugsweise 3000 bis 10000 ppm umfasst.

10. Verwendung einer auf eine Temperatur von 40 bis 60°C gebrachten wässrigen Behandlungs-Zusammensetzung, die als aktives Antioxidations-Wirkprinzip die Kombination eines Terpens, ausgewählt aus Eugenol, Isoeugenol, deren für Nahrungsmittel brauchbare Salze und deren Gemischen, mit einer oder mehreren Verbindungen, ausgewählt aus den Tocopherolen und den Polyphenolen, umfasst, zur Behandlung von Obst und Gemüse, um die Schalenbräune bei Frühreife und Schwarzfärbung der Haut des Obstes und Gemüses zu vermeiden, ohne vorhergehende Abkühlung des Obstes und Gemüses bis zum Kern.
